(19) Europäisches Patentamt
European Patent Office
Office européen des brevets

(11) **EP 2 042 694 B1**

(12) **EUROPEAN PATENT SPECIFICATION**

(45) Date of publication and mention
of the grant of the patent:
**16.08.2017 Bulletin 2017/33**

(51) Int Cl.:
***F01N 1/10*** *(2006.01)*      ***F01N 1/24*** *(2006.01)*
***F01N 3/28*** *(2006.01)*

(21) Application number: **08004071.0**

(22) Date of filing: **05.03.2008**

(54) **Mat member, exhaust gas treatment apparatus, and muffling apparatus**

Mattenelement, Abgasverarbeitungsvorrichtung und Auspufftopf

Élément de tapis, appareil de traitement de gaz d'échappement et silencieux

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **28.09.2007   JP 2007255889**

(43) Date of publication of application:
**01.04.2009   Bulletin 2009/14**

(73) Proprietor: **Ibiden Co., Ltd.**
**Ogaki-shi**
**Gifu 503-8604 (JP)**

(72) Inventor: **Saiki, Kenzo**
**Ogaki-shi,**
**Gifu 503-8559 (JP)**

(74) Representative: **Hoffmann Eitle**
**Patent- und Rechtsanwälte PartmbB**
**Arabellastraße 30**
**81925 München (DE)**

(56) References cited:
**EP-A- 0 366 484**      **WO-A1-2009/009600**
**JP-A- 2003 293 756**    **US-A- 4 302 495**
**US-B1- 6 521 834**

• **"Refractory Ceramic Fiber Bulks Refractory Ceramic Fiber Bulks Physical Properties Kaowool Kaowool RT Cerafiber Cerachem Cerachrome Saffil Color off white off white white white blue/green white Continuous Temperature Use Limit", °F, 1 January 2000 (2000-01-01), XP055263972, Retrieved from the Internet: URL:http://www.morganthermalceramics.com/sites/default/files/datasheets/5_kaowoolrtc erachemchromesaffil514-200.pdf**

**Description**

BACKGROUND OF THE INVENTION

1. Field of the Invention

The present invention relates to use of a mat member and more specifically to use of a mat member in an exhaust gas treatment apparatus and a muffling apparatus.

2. Description of the Related Art

The number of vehicles has been dramatically increased from the beginning of this century, thereby steadily and rapidly increasing the amount of exhaust gas exhausted from the internal combustion engines of the vehicles. Particularly, various materials included in the exhaust gas exhausted from diesel engines are responsible for causing contamination, thereby seriously damaging the world-wide environment.

Under such circumstances, various exhaust gas treatment apparatuses have been proposed and put into practice. In a typical exhaust gas treatment apparatus there is a cylindrical member (casing) in the middle of an exhaust gas tube connected to an exhaust gas manifold of an engine. In the casing there is an exhaust gas treatment member having opening surfaces for the inlet and the outlet of exhaust gas, and an inner part with plural fine holes. As examples of the exhaust gas treatment member, there are a catalyst carrier and an exhaust gas filter such as a Diesel Particulate Filter (DPF). When such a DPF is used, due to the structure of the exhaust gas treatment member, fine particles in exhaust gas are trapped onto the circumferential walls of the holes and removed from the exhaust gas between when the exhaust gas is introduced though the inlet opening and when the exhaust gas is exhausted from the output opening of the exhaust gas treatment member.

Generally, a holding and sealing member is placed between such an exhaust gas treatment member and a casing. The holding and sealing member is used to prevent contact between the exhaust gas treatment member and the casing so as to avoid damage while the vehicle is being operated and also prevent leakage of exhaust gas through the gaps between the casing and the exhaust gas treatment member. Further, the holding and sealing member has a role to avoid the displacement of the exhaust gas treatment member due to the pressure of the exhaust gas. Still further, the holding and sealing member is required to be kept at high temperature to sustain reactivity, and to have thermal insulation efficiency. As a member that meets the above requirements, there is a mat member made of inorganic fibers such as alumina-based fibers.

The mat member is wound around at least one part on the outer surface except for an opening surface of the exhaust gas treatment member and is integrated with the exhaust treatment member by, for example, taping, so as to be used as a holding and sealing member. After the processes, the integrated parts are housed inside the casing to form the exhaust gas treatment apparatus.

It should be noted that a mat member includes many fine inorganic particles (having a diameter typically between about 3 $\mu$m and about 6 $\mu$m), and the inorganic particles are exposed on the surfaces of the mat member. Those inorganic fibers may cause damage to the working environment. When an operator handles a mat member, more specifically, for example, the operator winds the mat member around an exhaust gas treatment member, those inorganic fibers may be easily scattered in the neighborhood.

To solve the problem, there is disclosed a mat member with resin films disposed on the front and the back sides of the mat member (see Patent Documents 1 and 2).

Patent Document 1: Japanese Patent Application Publication No. H08-61054
Patent Document 2: Japanese Patent Application Publication No. 2003-293756

However, when such a mat member with resin films on the front and the back sides of the mat member is used as a holding and sealing member in an exhaust gas treatment apparatus, there is a problem that the organic components included in the films may be thermally decomposed and the decomposed components may be exhausted outside the apparatus in an actual operation of the exhaust gas treatment apparatus, especially in its initial operation. Recently and continuing, regulations with respect to organic components in exhausted gas are becoming more and more strict. Therefore, preferably, the exhaust of such organic components is controlled as much as possible.

On the other hand, Patent Document 2 discloses a mat member in which the base member is sandwiched between resin films disposed on the front and the back sides of the base member, and pin-shaped resin members are provided for fusion-bonding between the resin film on the front side and the resin film on the back side to fix the resin films to the base member. As a result, the amount of organic binder included in the base member can be reduced.

However, as long as resin material is used in the films and pin-shaped members in a mat member, when the mat member is used as a holding and sealing member of an apparatus, some resin components included in the films and pin-shaped members are thermally decomposed due to the heat of the exhaust gas, and unfortunately, a considerable amount of organic components are inevitably exhausted outside the apparatus. As described above, a conventional mat member includes a considerable amount of organic components, and when such a mat member is used as a member to be heated at a high temperature such as a holding and sealing member of an exhaust gas treatment apparatus, there continuously arises a problem of an amount of organic components exhausted.

EP 0 366 484 A2 discloses a mounting composite for a catalytic converter, said mounting composite comprises a mounting mat and a metal fabric which serves to protect the edges of the mounting mat.

US 6,521,834 B1 discloses a fire stopping faceplate assembly comprising a faceplate having an inner surface, and a fire stopping mat arranged adjacent said faceplate inner surface including an intumescent compound and a layer of an infrared blocking material.

US 4,302,495 discloses a composite nonwoven fabric-like laminate with a mat of polymeric microfibers and a nonwoven thermoplastic netting.

WO 2009/009600 A1, not prepublished, discloses a reinforced composite laminate with a mat comprising ceramic or glass fibers and a reinforcement mesh comprising polymeric fibers.

## SUMMARY OF THE INVENTION

The present invention is made in light of the problems and may provide use of a mat member where inorganic fibers included in the mat member are difficult to be scattered and when the mat member is actually used in an exhaust gas treatment apparatus or a muffling apparatus, lesser amounts of organic components are exhausted from the apparatuses. The present invention may further provide an exhaust gas treatment apparatus and a muffling apparatus capable of controlling the amount of organic components exhausted from the apparatus when they are used.

According to an aspect of the present invention, there is provided use of a mat member as defined in claim 1.

Especially, it is preferable that a maximum length of the opening of the sheet member be equal to or less than a 95% lower limit value of a fiber length distribution of the inorganic fibers.

Alternatively, it is also preferable that a maximum length of the opening of the sheet member be equal to or less than 6 mm.

Alternatively, the inorganic fibers included in the base member may include alumina and silica.

Further, the base member may further include any one of inorganic binder and organic binder or both.

Alternatively, an organic component amount included in the mat member may be equal to or less than 4.5 wt%.

According to another aspect of the present invention, there is provided an exhaust gas treatment apparatus including an exhaust gas treatment member having two opening surfaces for passing exhaust gas, a holding and sealing member wound around at least a part of a circumferential surface of the exhaust gas treatment member, the circumferential surface excluding the opening surfaces, and a cylindrical member housing the exhaust gas treatment member with the holding and sealing member wound around the exhaust gas treatment member, wherein the holding and sealing member includes the mat member as described above.

According to still another aspect of the present invention, there is provided an exhaust gas treatment apparatus including an inlet tube and an outlet tube for exhaust gas, and an exhaust gas treatment member disposed between the inlet tube and the outlet tube, wherein a heat insulating member is disposed on at least a part of the inlet tube, and the heat insulating member includes the mat member as described above.

Here, the exhaust gas treatment member may be a catalyst carrier or an exhaust gas filter.

According to still another aspect of the present invention, there is provided a muffling apparatus including an inner pipe, an outer shell covering the outside of the inner pipe, and a sound absorber disposed between the inner pipe and the outer shell, wherein the sound absorber includes the mat member described above.

According to an embodiment of the present invention, there is provided use of a mat member from which inorganic fibers are difficult to be scattered and, when the mat member is actually used in an exhaust gas treatment apparatus or a muffling apparatus, a lesser amount of organic components are exhausted from the apparatus. Further, in the exhaust gas treatment apparatus using such a mat member as the holding and sealing member and/or the heat insulating member and in the muffling apparatus using such a mat member as the sound absorber, it is possible to significantly better control the amount of organic components exhausted from the apparatus when being used.

## BRIEF DESCRIPTION OF THE DRAWINGS

FIG. 1 is a drawing showing an exemplary configuration of a mat member used according to an embodiment of the present invention;

FIG. 2 is a drawing showing an exemplary configuration of an exhaust gas treatment apparatus in which a mat member is used as the holding and sealing member of the exhaust gas treatment apparatus;

FIG. 3 a drawing schematically showing an enlarged sheet member used in a mat member according to an embodiment of the present invention;

FIG. 4 is a drawing showing an exhaust gas treatment apparatus according to an embodiment of the present invention;

FIG. 5 is a drawing showing a muffling apparatus according to an embodiment of the present invention;

FIG. 6 is a graph comparing the organic component amount of mat members each having a sheet member disposed on a first main surface only (examples 1 through 4), mat member having a film on the first main surface only (comparative example 1), and a conventional mat member having no sheet member;

FIG. 7 is a graph showing the relationship between a disposing position of the sheet member and the organic component amount;

FIG. 8 is a drawing schematically showing a part of an organic fiber air erosion testing device;

FIG. 9 is a graph showing the relationship between the inorganic fiber scattering rate and the maximum length of the openings of the sheet member; and

FIG. 10 is a graph showing the relationship between the inorganic fiber scattering ratio and a disposing position of the sheet member.

## DETAILED DESCRIPTION OF THE PREFERRED EMBODIMENTS

Next, exemplary embodiments of the present invention are described with reference to the accompanying drawings.

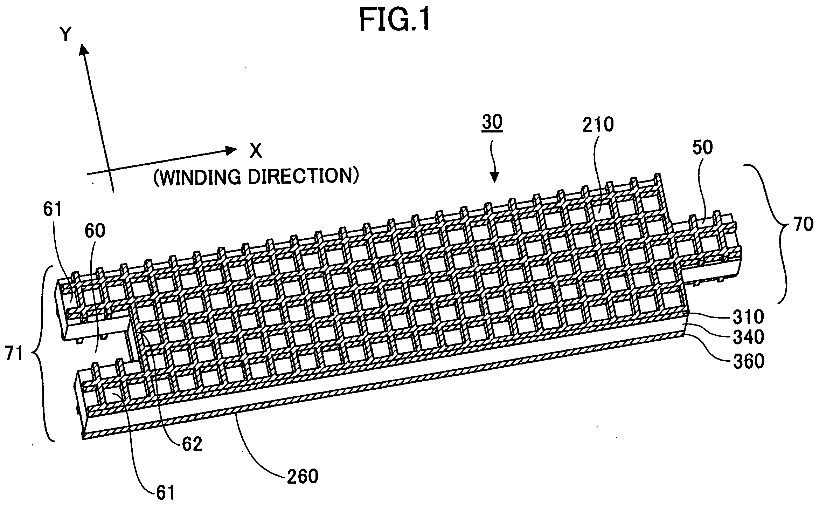

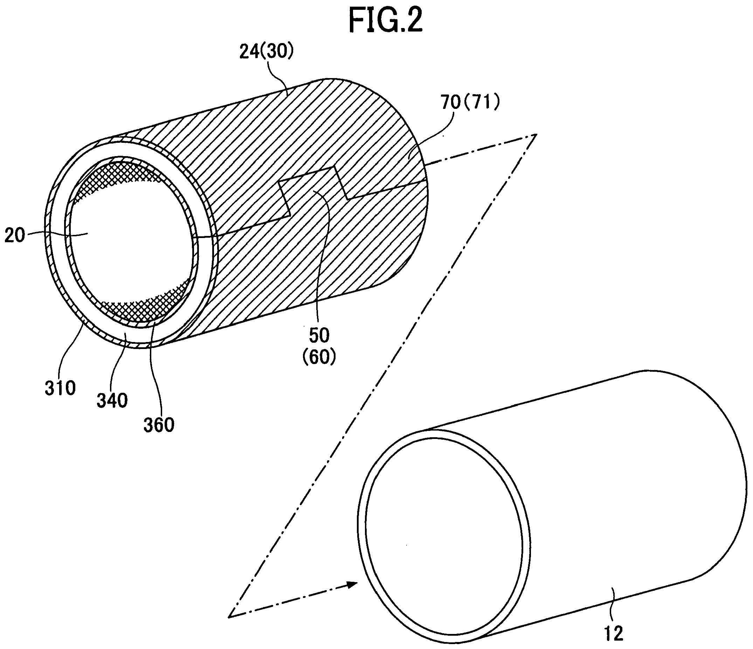

FIG. 1 shows an exemplary configuration of a mat member used according to an embodiment of the present invention. FIG. 2 is an exploded drawing of an exemplary exhaust gas treatment apparatus where a mat member is used as a holding and sealing member of the apparatus.

As shown in FIG. 1, a mat member 30 includes a base member 340 and sheet members 310 and 360 disposed on first and second main surfaces 210 and 260 (that is, first and second main surfaces of the base member 340), respectively. The base member 340 is mainly made of inorganic fibers, but, may further include inorganic binder and/or organic binder. In the example of FIG. 1, the sheet members are disposed on both the first and the second main surfaces of the mat member 30. However, the sheet member may be disposed on one of the main surface only.

As shown in FIG. 1, the mat member 30 has a long side (parallel to the X direction) and a short side (parallel to the Y direction) and is formed so as to have substantially a rectangular shape. There are an engage convex part 50 and an engage concave part 60 on the short sides 70 and 71, respectively. There are two convex parts 61 next to the engage concave part 60 on the short side 71. It should be noted, however, that the shape of the short sides 70 and 71 is not limited to the shape of FIG. 1 and may be, for example, a shape having no engage parts or having plural engage convex parts 50 and plural engage concave parts 60. It should be also noted that the term "substantially a rectangular shape" in this description refers to a rectangular shape having a pair of the engage convex parts 50 and the engage concave part 60. Further, the term "substantially a rectangular shape" may include a shape where the angle between the long and the short sides at the corner sections is other than 90 degrees (for example, having curvature at the corner sections).

As shown in FIG. 1, when this mat member 30 is used as a holding and sealing member 24, the direction of the long side is to be directed substantially parallel to the winding direction (X direction in FIG. 1). Further, as shown in FIG. 2, when the mat member 30 is wound around an exhaust gas treatment member 20 such as a catalyst carrier, the engage convex part 50 and the engage concave section 60 of the mat member 30 are engaged with each other and the mat member 30 is fixed to the exhaust gas treatment member 20. Then the exhaust gas treatment member 20 with the holding and sealing member 24 wound around the exhaust gas treatment member 20 is pressed and fixed into a cylinder-shaped casing 12 made of, for example, a metal. In FIG. 2, it should be noted that the first sheet member 310 of the mat member 30 is depicted in a shaded pattern.

Referring back to FIG. 1, the mat member 30 includes the first and the second sheet members 310 and 360 on the first and the second main surfaces 210 and 260, respectively. Further, there are openings formed on at least a part of the sheet member 310 and 360. In other words, in each of the sheet members 310 and 360, the entire member is not densely formed but is formed so as to have a prescribed opening ratio.

In such a sheet member, the opening ratio contributes to the reduction of the total weight of the sheet member. Therefore, even when the sheet members 310 and 360 are made of organic material such as polymer resin, the amount of organic components generated by thermal decomposition of the mat member used as the holding and sealing member of the exhaust gas treatment apparatus can be significantly reduced compared to a conventional mat member having a resin film on the surface of the mat member.

Further, as is obvious, the sheet members 310 and 360 include parts other than openings (hereinafter referred to as "framework part"). Therefore, the framework part presses down and contains the inorganic fibers of the base member 340. As a result, when a mat member having such a sheet member is handled, the scattering amount of the inorganic fibers can be significantly reduced compared to a mat member having no such a sheet member. It should be noted that the term "framework part" in this description refers to the part other than the openings of the sheet member.

Here, in a mat member used according to an embodiment of the present invention, the number of the openings formed on the sheet member is not necessarily limited to a specific number. Further, the opening ratio is not necessarily limited to a specific number either. For example, a sheet member may have plural openings, and the plural openings (and the framework part as well) may be substantially regularly formed. Further, the shape of the openings may have substantially the same shape or may be different shapes. For example the shape of the openings may be substantially circular, ellipsoidal, triangular, rectangular, square, rhombic, or polygonal.

Such a sheet member may be made of, for example, organic polymer-based material. The organic polymer-based material is not limited to, but may include, polyethylene, polypropylene, and polyethylene terephthalate. Especially, it is preferable that the sheet member include heat sealable material such as polyethylene (for example, "WARIFU" (registered trademark), manufactured by Nisseki Plasto, and "CONWED"). In this case, the sheet member can be adhered to the main surface of the base member when heated without using any adhesive. Therefore, the operatability is improved and the output amount of organic components can be further controlled. Further, in this case, the inorganic fibers disposed on the main surface of the base member are heat-sealed with the sheet member, so that the scattering of the inorganic fibers from the base member can be further controlled.

Next, more details of the reduction of the organic component amount and the scattering amount of the inorganic fibers, the characteristic features of the mat member used according to an embodiment of the present invention, are further described below.

(Reduction of organic component amount)

In the vehicle industry, it is recommended that the total organic component amount be 4.5 wt% or less so as to reduce the output amount of organic components from an exhaust gas treatment apparatus.

Generally, the organic component amount "M1" included in a sheet member using organic material is given by the following formula:

$$M1 = S \times t \times \rho \times (1 - \alpha) \qquad (1)$$

Where $S(cm^2)$:apparent area of the sheet member
$t(cm)$ : thickness of the sheet member
$\rho(g/cm^3)$:real density of the sheet member
$\alpha$: opening ratio of the sheet member

In a general case, a prescribed amount of organic binder (for example, approximately 1 wt%) is added in the forming process to facilitate the handling of the mat member. Therefore, when "M2" represents the organic component amount included in the base member, the following relational formula to control the output amount of the organic components from the mat member is obtained.

$$\{(M1+M2)/(M1+W+M2)\} \times 100 \leqq 4.5 \ (wt\%) \qquad (2)$$

where the symbol "W" represents the weight (g) of the base member excluding the weight of the organic binder (therefore, the weight of the base member is given as "W+M2").

Here, to tentatively calculate the total organic amount included in a mat member used according to an embodiment of the present invention, the following values are selected and used.

Basis weight of the base member: 1,160 $g/m^2$
Area: 100 $cm^2$
Amount of organic binder included in the base member: 1 wt% of the total weight of the base member (the weight of the base member + the amount of organic binder)
Material of the sheet member: polypropylene having the density of 0.91 $g/cm^3$
Thickness of the sheet member: 0.15 mm
Opening ratio of the sheet member: 93%

Then, values, M1=0.096 g, M2=0.117 g, and W=11.6 g, are obtained. As a result, the total organic component amount included in the mat member used according to an embodiment of the present invention is 1.8 wt% when one sheet member is used (namely, the sheet member is disposed on one main surface only), and 2.6 wt% when two sheet members are used (namely, the sheet members are disposed one on each main surface). Therefore, both values adequately meet the requirement of formula (2).

On the other hand, when a conventional sheet member (having the opening ratio: $\alpha$=0) is used, values, M1=1.365 g, M2=0.117 g, and W=11.6 g, are obtained. As a result, the total organic component amount included in the mat member is 11.3 wt% and 19.7 wt% when one and two sheet members are used, respectively. Therefore, even when the sheet member is disposed only on one main surface of the mat member, the value does not meet the requirement of formula (2). Conversely, in order to meet the requirement of formula (2) in a conventional mat member, it is necessary to reduce the thickness "t" of the sheet member down to less than 0.047 mm when one sheet member is used and less than 0.024 mm when two sheet members are used. However, a sheet member having such a thickness is too thin to be handled.

In the mat member as described above, the organic component amount can be significantly better controlled compared to a conventional mat member. Further, the organic component amount of the mat member according to an embodiment of the present invention can easily attain the required range (4.5 wt% or less). It should be noted that the above tentative calculation is provided as an example for explanation purposes. In a practical case, it should be kept in mind that an output amount of the organic component due to thermal decomposition from the mat member varies depending on, for example, the unevenness of the in-plane distribution of the organic binder included in the base member.

(Reduction of the scattering amount of inorganic fibers)

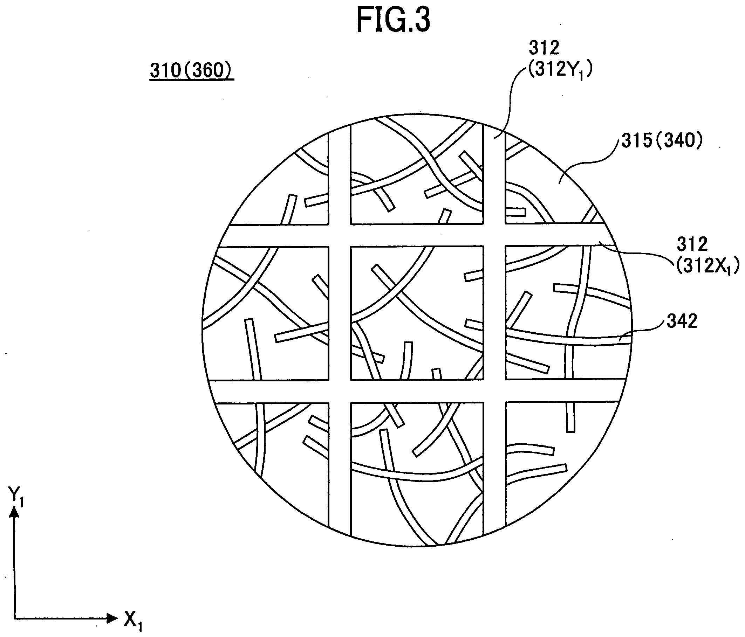

FIG. 3 is partially enlarged sheet members 310 and 360 (hereinafter simplified as "sheet member 310" unless otherwise necessary to distinguish between sheet members) of a mat member used according to an embodiment of the present invention.

The sheet member 310 in FIG. 3 has framework part 312 and openings 315. In the example of FIG. 3, the framework part 312 includes a group of plural straight lines $312X_1$ extending in the $X_1$ direction, and a group of plural straight lines $312Y_1$ extending in the $Y_1$ direction. The each area surrounded by straight lines $312X_1$ and straight lines $312Y_1$ is an opening 315.

Obviously, some parts of the main surface of the base member 340 are exposed though the openings 315. However, in the use of a mat member according to an embodiment of the present invention, the scattering and dropping off of the inorganic fibers 342 included in the base member 340 though the openings 315 may be controlled due to the reason(s) described below.

Namely, the framework part 312 ($312X_1$ and $312Y_1$) of the sheet member 310 holds down and contains the organic fibers disposed on the main surface side of the base member 340 close to the sheet member 310. Generally, the length of the inorganic fibers 342 included in the base member 340 is in a range between approximately 10 mm and approximately 100 mm. Therefore, as long as at least a part of each inorganic fiber is pressed down by the framework part 312, neither significant scattering nor drop off of the inorganic fibers 342 from the openings 315 are likely to occur. Especially, when the "maximum length" of the opening 315 is selected and formed according to the procedure described below, the scattering and drop off of the inorganic fibers through the openings can be extremely effectively controlled. It should be noted that the terms "maximum length" refers to the longest distance between any ends of an opening in a two-dimensional plane. For example, when an opening has a shape as in FIG. 3 (a squared shape), the "maximum length" of the opening is equivalent to the length of the longest diagonal line of the opening.

Especially, it is preferable that the maximum length of the opening 315 be equal to or less than the "95% lower limit value" ("$M_{95\%}$").

Here, the "95% lower limit value" ("$M_{95\%}$") of the fiber length of the inorganic fibers can be determined from the fiber length distribution of the inorganic fibers 342 included in the base member 340 as follows:

First, one hundred inorganic fibers included in the base member 340 are randomly selected, and each length, "$L_i$" (i=1 through 100) of the selected inorganic fibers is measured. Next, each natural logarithm value "$\ln(L_i)$" of the corresponding "$L_i$" value is obtained. Then an average value "A" and a standard deviation "$\sigma$" of the "$\ln(L_i)$" are obtained.

Further, a value "K" is obtained from the following formula:

$$K = A - 2 \times \alpha \qquad\qquad (3)$$

This "K" value corresponds to the "95% lower limit value". Namely, the fiber length data of the inorganic fibers is in a range equal to or more than the value of "K" with 95% probability. Last, a conversion to restore the "K" to the original dimension is made by an exponential function "$e^k$" to obtain the "95% lower limit value" ("$M_{95\%}$") of the fiber length of the inorganic fibers.

When it is assumed that the maximum length of the opening 315 is equal to or less than the 95% lower limit value $M_{95\%}$ of the inorganic fibers 342 included in the base member 340, most of the inorganic fibers 342 included in the base member 340 are contained by the framework part 312 of the sheet member 310. Therefore, in this case, the amount of inorganic fibers scattered or dropped through the openings 315 can be significantly controlled.

As described above, the use of a mat member according to an embodiment of the present invention can control the organic component amount in the mat member more than a conventional sheet member having sheet members disposed one on each of the front side and the back side, and can provide a scattering reduction effect comparable to a conventional mat member.

In the example in FIG. 3, the framework part 312 of the sheet member 310 includes the group of plural straight lines $312X_1$ extending in the $X_1$ direction, and a group of plural straight lines $312Y_1$ extending in the $Y_1$ direction. Those straight lines $312X_1$ and $312Y_1$ may be arranged regularly at a constant interval, or may be arranged at random intervals. Further, each of the straight lines $312X_1$ and each the straight lines $312Y_1$ are not necessarily orthogonal to each other, and the crossing angle of a straight line $312X_1$ to a straight line $312Y_1$ may be any number of degrees other than zero. Still further, the framework part 312 of the sheet member 310 may have, for example, groups of third and fourth straight lines extending in third and fourth directions, respectively.

For example, the sheet member 310 may be a sheet-type member having a net shape. The net-shaped sheet type member may be like a net with a knot at each cross-point (like a so-called knot net), a net without knots like a raschel net and a knotless net, or a so-called woven net where two straight line parts extending in two directions are mutually woven to constitute its framework part.

Still further, the framework part does not always necessarily include an array of straight lines, and may have an array of curved lines. Otherwise, the sheet member may have one or more openings formed regularly and randomly by a punching process. Ultimately, what is important point for the sheet member of a mat member used according to an embodiment of the present invention is that the sheet member does have an opening. As long as the sheet member has the opening, the sheet member and the framework part and the openings of the sheet member may have any shape.

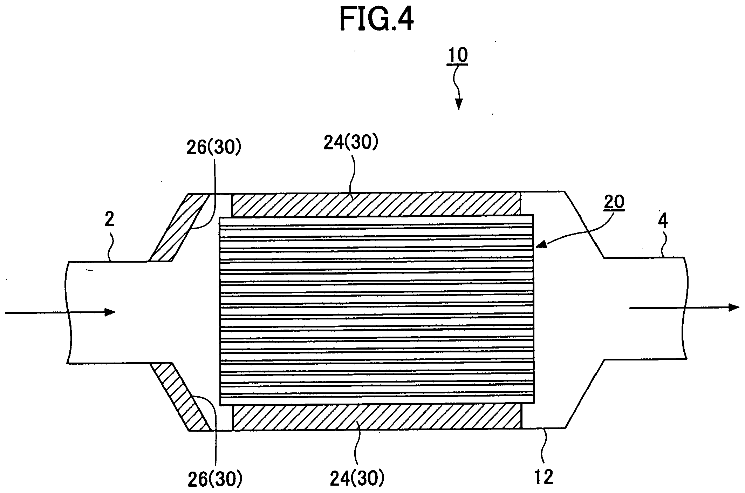

The mat member is used as a holding and sealing member and/or a heat insulating member of an exhaust gas treatment apparatus 10. FIG. 4 shows an exemplary configuration of an exhaust gas treatment apparatus 10 according to an embodiment of the present invention.

The exhaust gas treatment apparatus 10 includes an exhaust gas treatment member 20, a holding and sealing member 24 wound around the exhaust gas treatment member 20, a casing 12 housing the exhaust gas treatment member 20, and an inlet tube 2 and an outlet tube 4 for the inlet and the outlet of exhaust gas connected to the input side and the outlet side of the casing 12, respectively. Both the inlet tube 2 and the outlet tube 4 have a tapered shape so that the diameters of the inlet tube 2 and the outlet tube 4 are increased where connected to the casing 12. Further, a heat insulating member 26 is disposed on the tapered section of the inlet tube 2. The heat insulating member 26 controls the heat transfer from the inside of the exhaust gas treatment member 10 to the outside through the inlet tube 2. In this example in FIG. 4, the exhaust gas treatment member 20 is a catalyst carrier including opening surfaces for the inlet and the outlet of exhaust gas and plural through holes arranged in the direction parallel to the direction of the flow of exhaust gas. The catalyst carrier may be made of porous silicon carbide. The configuration of an exhaust gas treatment apparatus 10 is not limited to the above mentioned examples. For example, the exhaust gas treatment member 20 may be the DPF with some of the through holes sealed.

In this configuration, a mat member 30 is used as the holding and sealing member 24 and the heat insulating member 26. In the exhaust gas treatment apparatus having such a configuration, when the mat member 30 is handled, more specifically, for example, when the mat member 30 is wound around the exhaust gas treatment member 20 as the holding and sealing member 24, or when the mat member 30 is disposed on the exhaust gas treatment member 20 as the heat insulating member 26, the scattering of the inorganic fibers can be significantly controlled. Further, when the exhaust gas treatment apparatus 10 is being used (especially used in an initial operation), the amount of organic components decomposed and emitted due to the heat of exhaust gas can be significantly better controlled.

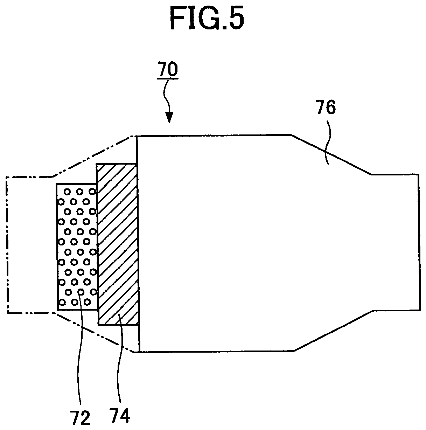

Next, another application of a mat member according to an embodiment of the present invention is described. FIG. 5 schematically shows use of a mat member in an exemplary muffling apparatus according to an embodiment of the present invention. This muffling apparatus is disposed in the middle of an exhaust tube of, for example, a vehicle. The muffling apparatus 70 includes an inner pipe 72 (made of, for example, a metal such as stainless steel), an outer shell 76 covering the outer circumference of the inner pipe 72 (made of, for example, a metal such as stainless steel), and a sound absorber 74 disposed between the inner pipe 72 and the outer shell 76. Typically, plural small holes are formed on the surface of the inner pipe 72. In such a muffling apparatus 70, when exhaust gas is passed through the inner pipe 72, noise of the exhaust gas can be attenuated by the sound absorber 74.

Here, the mat member 30 can be used as the sound absorber 74. By using a mat member as the sound absorber 74, the scattering of the inorganic fibers when the sound absorber 74 is disposed in the muffling apparatus 70 can be significantly controlled.

In the following, an example of the forming method of the mat member 30 is described.

First, the base member mostly made of inorganic fibers is formed. It should be noted that in the following descriptions, though the mixture of alumina and silica is used as the inorganic fibers, the inorganic fibers are not limited to this mixture and may be made of alumina only or silica only. Silica sol is added to a basic aluminum chloride aqueous solution with aluminum content 70 g/l and Al/Cl=1.8 (atom ratio) such that the composing ratio of alumina and silica is 60-80:40-20 to prepare the precursor of inorganic fibers. More preferably, the composing ratio of alumina and silica is approximately 70-74:30-26. This is because when the composing ratio of alumina is equal to or less than 60%, since the composing ratio of mullite prepared from alumina and silica is lowered, the heat conductivity of each formed layer is apt to be increased.

Next, an organic polymer such as polyvinyl alcohol is added to the precursor of the alumina-based fibers. Then the liquid is condensed to prepare a spinning solution. Next, fibers are formed by a blowing process using the obtained spinning solution.

The blowing method refers to a method of forming fibers using a air flow blown from an air nozzle and a spinning solution flow pushed out through a spinning solution supply nozzle. The gas flow speed per slit from the air nozzle is typically in a range between 40 to 200 m/s. The diameter of the spinning nozzle is typically in a range between 0.1 to 0.5 mm, and the fluid volume per spinning solution supplying nozzle is typically in a range between about 1 to about 120 ml/h, preferably between about 3 to about 50 ml/h. Under such conditions, the spinning solution pushed out through the spinning solution supply nozzle can be sufficiently extended without being turned into a spray (a fine liquid mist). In this case, since the formed fibers are hard to be adhered to each other, it is possible to form a uniform alumina fiber precursor having a narrower fiber diameter distribution by optimizing spinning conditions.

Next, the base member is formed by laminating the precursors in which the fibers have been formed. Further, a needling process is performed on the base member. In this case, the needling process refers to a process in which needles are thrust into and pulled out of the base member to reduce the thickness of the base member. In the needling process, a dedicated needling device is usually used.

Generally, the needling device includes a needle board reciprocally movable in the thrusting direction (typically in the up-and-down direction) and a pair of supporting boards provided on both sides facing the front face and the rear face of the base member. On the needle board there are plenty of needles arranged in a density of, for example, about 25 to about 5,000 needles per 100 cm$^2$ to thrust into the base member. In each supporting board, there are plenty of through holes for passing the needles. Therefore, while the base member is held down on both sides by a pair of the supporting boards, by bringing the needle board close to the base member and separating the needle board away from the base member, the needles are thrust into and pulled out of the base member to form a base member having plenty of interlaced points where the fibers are confounded.

As another configuration, the needling device may include a pair of needle boards as a set. Each needle board has the corresponding supporting board. Two needle boards are provided on both first and second sides of the base member, and the base member is held down on both sides by the supporting boards. The needles on the needle boards are arranged so that the positions of the needles on one needle board are not overlapped with the positions of the needles on the other needle board. Further, there are so many through holes provided in each of the supporting boards in consideration of the positions of needles on both needle boards so that no needle should contact the supporting boards when the needling process is performed on both surfaces of the base member. With such a device, the base member may be held down from both surfaces by using the two supporting boards and the needling process may be performed on the base member from both surfaces by using a pair of needle boards. By using such a method for needling process, the processing time can be shortened.

At the interlaced points generated in the needling process, the fibers complexly confounded are arranged in the laminating direction, thereby reinforcing the base member in the laminating direction.

After being subject to the needling process, the base member is heated from room temperature and calcinated at a maximum temperature about 1,250 °C to obtain the base member having a prescribed basis weight (weight per unit area).

Next, organic binder like resin may be impregnated into the base member to facilitate the handling of the base member. It is preferable to reduce the amount of the organic binder as much as possible down to, for example, about 1.0 wt%.

As the organic binder, for example, epoxy resin, acrylic resin, rubber-based resin, and styrene-based resin may be used. For example, it is preferable to use, for example, acrylic-based (ACM), acrylonitrile-butadiene rubber (NBR), or styrenebutadiene rubber (SBR) resin.

Next, a sheet member with at least an opening is disposed on first and/or second main surfaces of the sheet member. As described above, when thermally adhesive material (for example, polyethylene) is used in the sheet member, the sheet member can be easily adhered to the main surface of the base member without using binder, which significantly facilitates operations. Further, when the mat member formed as described above is integrated into and used in the exhaust gas treatment apparatus, the output amount of organic elements can be further reduced. When the sheet member including thermally adhesive material is disposed on each of the main surfaces of the base member, first, a sheet member is disposed on the first main surface of the base member and is heated at a temperature between about 140 °C and about 270 °C for one minute under a pressure between 10 kPa and 100 kPa so as to be adhered to the first main surface of the base member. Next, the sheet member including the above-mentioned or another thermally adhesive material is disposed on the second main surface of the base member and is heated at a temperature between about 140 °C and about 270 °C for one minute under a pressure between 10 kPa and 100kPa. By doing this, the sheet members can be adhered to both of the main surfaces of the base member. However, it should be noted that sheet members may be adhered to both main surfaces of the base member at the same time as well.

Through the processes described above, the mat member with the sheet member having openings on the first and/or the second main surfaces can be formed.

It should be noted that the thus obtained mat member is finally cut into a prescribed shape (for example, a shape shown in FIG. 1). However, this cutting process may be performed before the sheet member is disposed on the base member (namely, the base member is not yet adhered to the sheet member).

In the following, effects of the present invention are described with reference to the examples below.

(Example 1)

First, silica sol is added to basic aluminum chloride aqueous solution with aluminum content of 70 g/l and Al/Cl=1.8 (atom ratio) such that the relative proportion of $Al_2O_3:SiO_2$ in alumina-based fibers is 72:28 to prepare the precursor of alumina-based fibers. Next, polyvinyl alcohol is added to the precursor of alumina-based fibers. Further, this liquid is condensed to prepare a spinning solution. From the spinning solution, fibers are formed by the blowing spinning process. The flow rate of the carrier gas (air) is 52 m/s and the supplying rate of the spinning solution is 5.3 ml/h.

Then, the precursor of the alumina-based fibers is folded and laminated to form a base member of alumina-based fibers.

Next, the needling process is performed to the obtained base member. In the needling process, a needling board having needles at a density of 80 needles per 100 $cm^2$ is provided on one side of the base member and the needling is performed from the one side of the base member.

Then, the obtained base member is heated from room temperature to 1,250 °C and the temperature is maintained for one hour for continuous calcination. Next, organic binder is impregnated into the base member through a first main surface of the base member. As the organic binder, acrylate-based Latex Emulsion is used and the impregnation amount is 1 wt% of the total weight of the base member (including the organic binder). The basis weight of the obtained base member is 1,160 $g/m^2$.

Next, each fiber length of the 100 inorganic fibers included in the base member is measured. Then, the "95% lower limit value" "$(M_{95\%})$" of the inorganic fibers is calculated base on the above-mentioned method. The obtained value of the "$(M_{95\%})$" is 6.08 mm.

Next, a polypropylene sheet member (thickness: 0.15 mm) having openings is disposed only on one main surface (a first main surface) of the base member. After being disposed on the first main surface of the base member, the sheet member is heated at a temperature of 200 °C for one minute under the pressure of about 15 kPa to adhere to the base member. The framework part of the sheet member has a structure where two groups of straight lines extending in two directions cross each other at substantially right angles as shown in FIG. 3. The width of the straight lines in both $X_1$ and $Y_1$ directions is 0.15 mm. The pitch of the straight lines in both $X_1$ and $Y_1$ directions (distance between the centers of adjoining straight lines) is 2.8 mm. The maximum length of the openings of the sheet member is 4.0 mm. The opening ratio of the sheet member is 93%. The mat member thus obtained is called "Example 1".

(Examples 2 through 4)

In the same manner as above, mat members "Examples 2 through 4" each having a sheet member and openings on the first main surface of the mat member are formed. However, in "Example 2", the pitch of the straight lines constituting the framework part of the sheet member in both $X_1$ and $Y_1$ directions (distance between the centers of adjoining straight lines) is 4 mm; the maximum length of the openings of the sheet member is 5.7 mm; and the opening ratio is 93%. In "Example 3", the pitch of the straight lines in both $X_1$ and $Y_1$ directions (distance between centers of adjoining straight lines) is 6 mm; the maximum length of the openings of the sheet member is 8.5 mm; and the opening ratio is 95%. In "Example 4", the pitches of the straight lines (distances between the centers of adjoining straight lines) in $X_1$ and $Y_1$ directions are 8 mm and 9 mm, respectively; the maximum length of the openings of the sheet member is 12.0 mm; and the opening ratio is 96%.

(Example 5)

In the same manner as in "Example 2", a mat member ("Example 5") is formed. However, in "Example 5" after a sheet member having openings is disposed on the first main surface of the base member, the base member is reversed so that another sheet member having openings is disposed on the entire second main surface of the base member in the same manner described above. The specifications of the sheet members disposed on both main surfaces are the same as those of the sheet member used in "Example 2". Namely, the pitch of the straight lines constituting the framework part of the sheet member in both $X_1$ and $Y_1$ directions (distance between the centers of adjoining straight lines) is 4 mm; the maximum length of the openings of the sheet member is 5.7 mm; and the opening ratio is 93%.

(Example 6)

In the same manner as in "Example 5", a mat member ("Example 6") is formed. However, in "Example 6", the same sheet member is disposed around the entire circumference surface including the first and the second main surfaces of the base member in the same manner.

(Comparative example 1)

In the same manner as in "Example 1", a mat member with a sheet member disposed on the first main surface of the mat member is formed. However, in "Comparative example 1", a polypropylene film having no openings is used as the sheet member. The thickness of the film is 0.05 mm.

(Comparative example 2)

A mat member having only the base member formed in the same manner as in "Example 1" is formed. The mat member thus obtained is called "Comparative example 2".

(Measurement of organic component amount)

Each organic component amount included in the above-mentioned mat member is measured. The method of measuring the organic component amount is as follows:

First, a sample of a mat member (100 mm×100 mm) is dried at a temperature of 110 °C for one hour, and the weight of the sample (weight before calcination) is measured. Next, the sample is calcinated at a temperature of 600 °C for one hour and is cooled to room temperature, and the weight of the sample (weight after calcination) is measured. Based on the measured values, the organic component amount of the mat member is calculated in the following formula:

```
Organic component amount (%) =
        {("Weight before calcination"-"Weight after
calcination")/("weight before calcination")}×100   (4)
```

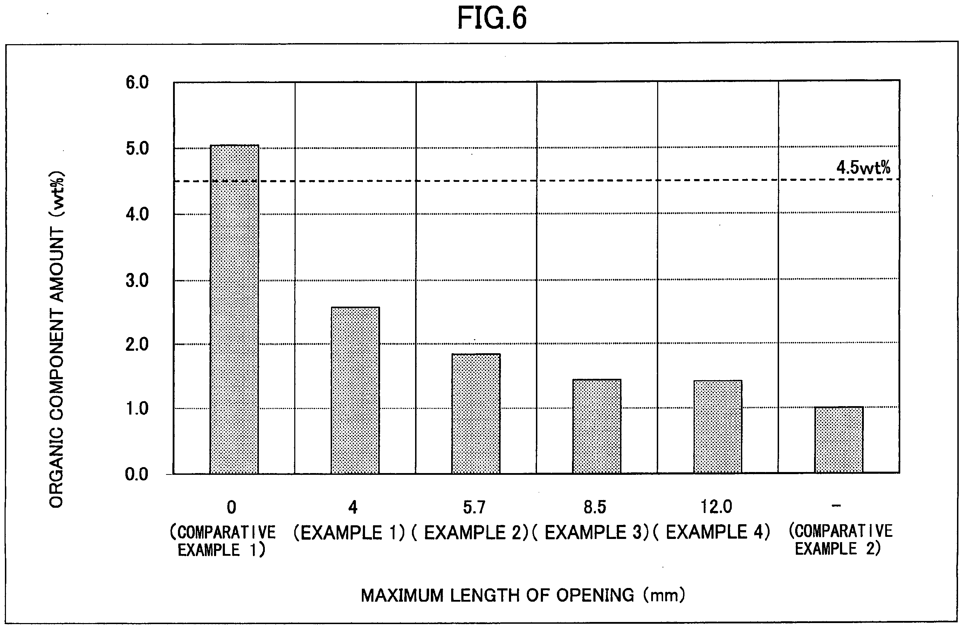

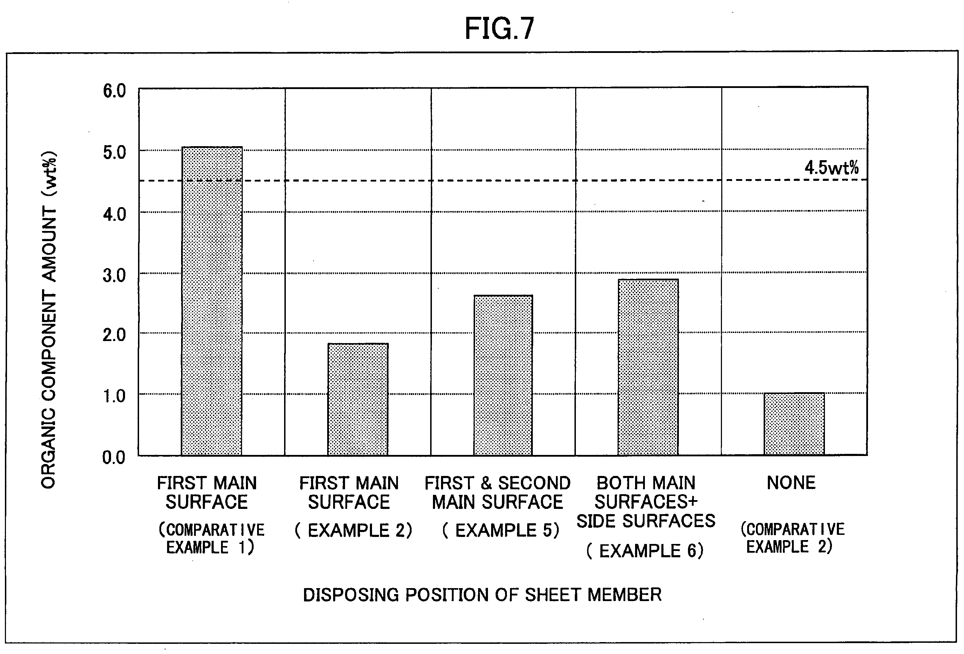

Table 1 shows the measurement result of the organic component amount of each mat member. Further, FIG.6 is a graph showing the comparative results of the organic component amounts of mat members ("Examples 1 through 4") each having the sheet member disposed only on the first main surface of the mat member, a conventional mat member ("Comparative example 1"), and a conventional mat member having no sheet member ("Comparative example 2"). Further, FIG. 7 is another graph showing the relationship between the organic component amount and the position of the sheet member.

TABLE 1

| | DISPOSING POSITION OF SHEET MEMBER ON BASE MEMBER | SHEET MEMBER | | | | | CHARACTERISTIC EVALUATION | |
|---|---|---|---|---|---|---|---|---|
| | | PITCH $(X_1 \times Y_1)$ (mm) | WIDTH OF STRAIT LINE (mm) | MAXIMUM LENGTH OF OPENING (mm) | OPENING RATIO | THICKNESS (mm) | ORGANIC COMPONENT AMOUNT (wt%) | INORGANIC FIBER SCATTERING RATE (wt%) |
| EXAMPLE 1 | FIRST MAIN SURFACE | 2.8×2.8 | 0.15 | 4.0 | 0.93 | 0.15 | 2.57 | 0.186 |
| EXAMPLE 2 | FIRST MAIN SURFACE | 4×4 | 0.15 | 5.7 | 0.93 | 0.15 | 1.83 | 0.190 |
| EXAMPLE 3 | FIRST MAIN SURFACE | 6×6 | 0.15 | 8.5 | 0.95 | 0.15 | 1.45 | 0.232 |
| EXAMPLE 4 | FIRST MAIN SURFACE | 8×9 | 0.15 | 12.0 | 0.96 | 0.15 | 1.41 | 0.243 |
| EXAMPLE 5 | FIRST AND SECOND MAIN SURFACE | 4×4 | 0.15 | 5.7 | 0.93 | 0.15 | 2.65 | 0.142 |
| EXAMPLE 6 | BOTH MAIN SURFACES+ SIDE SURFACES | 4×4 | 0.15 | 5.7 | 0.93 | 0.15 | 2.88 | 0.125 |
| COMPARATIVE EXAMPLE 1 | FIRST MAIN SURFACE | FILM (NO OPENING) | - | - | 0 | 0.05 | 5.04 | 0.182 |
| COMPARATIVE EXAMPLE 2 | NONE | NONE | - | - | - | - | 1.00 | 0.252 |

According to Table 1 and FIGS. 6 and 7, the organic component amount in each mat member ("Examples 1 through 6") is significantly reduced compared to that of the mat member of "Comparative example 1". Further, in both "Example 5" where the sheet members are disposed on both main surfaces of the mat member, and "Example 6" where the sheet member is disposed around the entire circumference including the first and the second main surfaces of the base member, the organic component amounts included in the mat members are less than 4.5 wt%, which sufficiently meets the requirement of formula (2) described above.

(Inorganic fiber air erosion test)

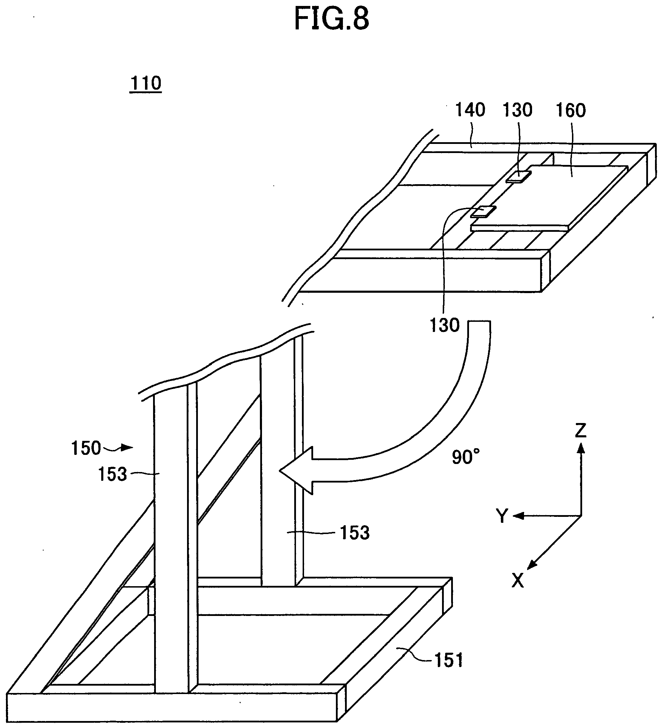

An inorganic fiber air erosion test is performed on each mat member described above. FIG. 8 shows a part of a testing device.

The air erosion test is performed as follows: first, each test sample 160 (100 mm×100 mm) of mat members described above is prepared. As shown in FIG. 8, the test sample 160 is fixed to one end of an arm frame 140 (longitudinal length: 915 mm, width 322 mm) extending from the testing device 110 with two clips 130. The other end of the arm frame 140 is connected to a vertical frame 150 of the testing device 110. The vertical frame 150 is mounted on a base frame part 151 so as to make upright the vertical frame 150. Further, the vertical frame 150 has a main plane (height in Z-direction (excluding the height of the base frame part 151) 1,016 mm × length in X-direction 322 mm) extending in the XZ plane in FIG 8. In the figure, the widths in X-direction and Y-direction of each of two metal poles 153 of the vertical frame 150 are 25 mm and 25 mm, respectively. The arm frame 140 is capable of rotating in the plane (YZ plane) orthogonal to the main plane of the vertical frame 150 around an end part of the arm frame 140 as a fulcrum, the end part being connected to the upper end (not shown) of the vertical frame 150. The rotation angle of this testing device can be more than 90 degrees with respect to main plane of the vertical frame 150. In this test, the arm frame 140 is dropped from the position where the angle of the arm frame 140 with respect to the vertical direction is 90 degrees (namely, the arm frame 140 is in a horizontal position). Then, the arm frame 140 rotates 90 degrees in the arrow direction along the YZ plane. Due to the rotation, the sample 160 also rotates in the arrow direction. The arm frame 140 finally collides with the metal poles 153 of the vertical frame 150. This collision leads to the scattering of some inorganic fibers from the sample 160. After the test, the sample 160 is removed from the clips 130. Then, the scattering rate of the inorganic fibers is obtained by the following formula:

$$\text{Scattering rate of inorganic fibers (wt\%)} =$$
$$(\text{"weight of mat member sample before test"} -$$
$$\text{"weight of mat member sample after test"}) / (\text{"weight of}$$
$$\text{mat member sample before test"}) \times 100 \qquad (5)$$

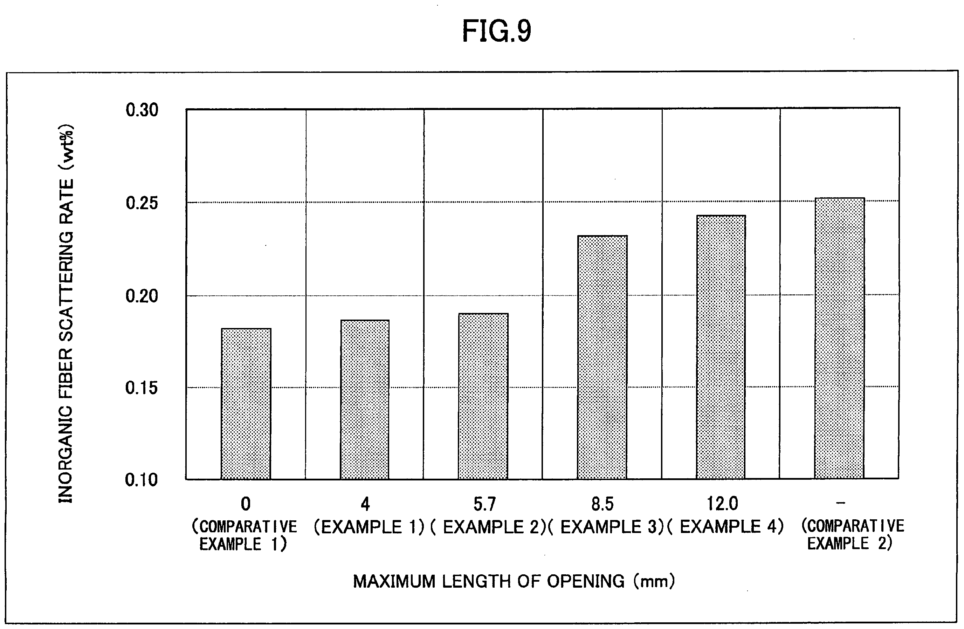

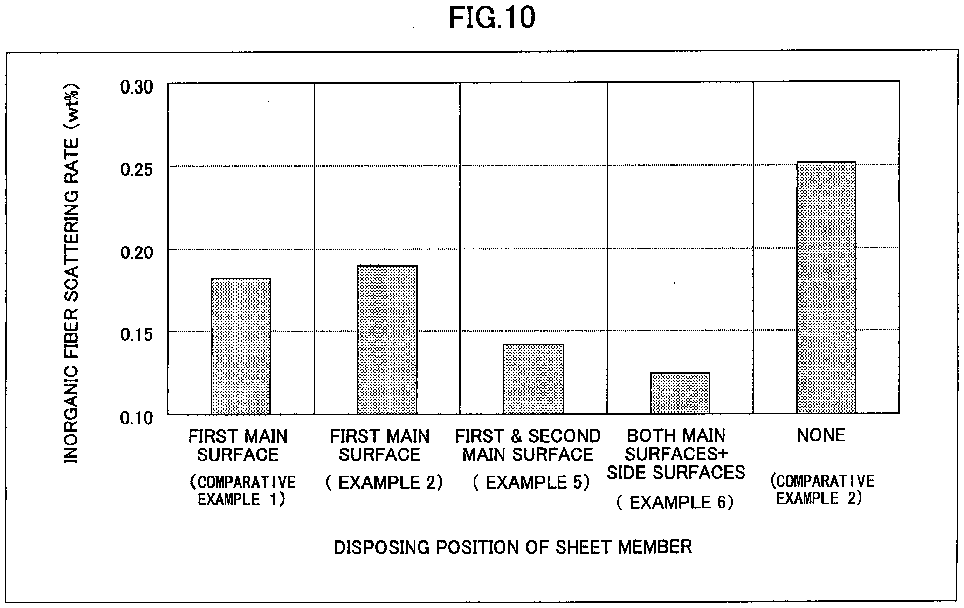

Table 1 shows the air erosion test results of each mat member. Further, FIG. 9 shows the relationship between the inorganic fiber scattering rate and the maximum length of openings. Still further, FIG 10 shows the relationship between the inorganic fiber scattering rate and the position of the sheet member.

According to Table 1 and FIGS. 9 and 10, each inorganic fiber scattering rate of the mat members (in "Examples 1 through 6") is significantly reduced compared to that of the mat member in "Comparative example 2". Especially, the inorganic fiber scattering rate of the mat members in "Examples 1 and 2" is not so much higher than that of the mat member in "Comparative example 1". Therefore, extremely effective inorganic fiber scattering control effect is attained (see FIG. 9). Further, the inorganic fiber scattering rate in the mat members in "Examples 5 and 6" is lower than that of the mat member in "Comparative example 1" (see FIG. 10). According to those results, as a base member area where the sheet member having openings is disposed is increased in the order of the first main surface → the first and the second main surfaces → both main surfaces + the entire circumferential surface, the controlling effect of scattering inorganic fibers is largely increased.

FIG. 9 shows that the inorganic fiber scattering ratio is drastically different between when the maximum length of the openings of the sheet member is equal to or less than 5.7 mm and when the maximum length is equal to or more than 8.5 mm. In the examples, the "95% lower limit value" ("$M_{95\%}$") of the inorganic fibers in the sheet members is 6.08 mm. Therefore, the above result suggests that the scattering of inorganic fibers may be further reduced by reducing the maximum length of the openings of the sheet member to be equal to or less than the "95% lower limit value" ("$M_{95\%}$") of the inorganic fibers in the sheet members.

An exhaust gas treatment apparatus according to embodiments of the present invention may be used in, for example, an exhaust gas treatment apparatus for a vehicle.

**Claims**

1. Use of a mat member (30) as a holding and sealing member in an exhaust gas treatment apparatus (10), wherein the mat member (30) comprises:

   a base member (340) including inorganic fibers (342) and having first and second main surfaces (210, 260); and a sheet member (310,360) disposed on at least one of the first and the second main surfaces (210, 260), wherein the sheet member (310, 360) includes openings (315) and a framework part (312), which is a part other than the openings of the sheet member (310, 360),
   said framework part (312) includes at least a first line part and a second line part, wherein
   the first line part includes plural straight lines extended substantially in a first direction and arranged at a substantially regular interval; and
   the second line part includes plural straight lines extended substantially in a second direction and arranged at a substantially regular interval, wherein
   the sheet member (310, 360) includes any one of polyethylene, polypropylene, and polyethylene terephthalate.

2. The use according to claim 1, wherein
   the plural openings (315) are substantially regularly arranged.

3. The use according to claim 1 or 2, wherein
   the shapes of the openings (315) are substantially equal to each other.

4. The use according to any one of claims 1 through 3, wherein
   a maximum length of the openings (315) of the sheet member (310, 360) is equal to or less than a 95% lower limit value of a fiber length distribution of the inorganic fibers (342).

5. The use according to any one of claims 1 through 3, wherein
   a maximum length of the openings (315) of the sheet member (310, 360) is equal to or less than 6 mm.

6. The use according to any one of claims 1 through 5, wherein
   the inorganic fibers (342) include alumina and silica.

7. The use according to any one of claims 1 through 6, wherein
   the base member (340) further includes any one of inorganic binder and organic binder or both.

8. The use according to any one of claims 1 through 7, wherein
   an organic component amount included in the mat member (30) is equal to or less than 4.5 wt%.

9. An exhaust gas treatment apparatus (10) comprising:

   an exhaust gas treatment member (20) having two opening surfaces for passing exhaust gas;
   a holding and sealing member (24) wound around at least a part of a circumferential surface of the exhaust gas treatment member (30), the circumferential surface excluding the opening surfaces; and
   a cylindrical member (12) housing the exhaust gas treatment member (20) with the holding and sealing member (24) wound around the exhaust gas treatment member (20), wherein
   the holding and sealing member (24) includes the mat member (30) as defined in any one of claims 1 through 8.

10. An exhaust gas treatment apparatus (10) comprising:

    an inlet tube (2) and an outlet tube (4) for exhaust gas; and
    an exhaust gas treatment member (20) disposed between the inlet tube (2) and the outlet tube (4), wherein
    a heat insulating member (26) is disposed on at least a part of the inlet tube (2); and
    the heat insulating member (26) includes the mat member (30) as defined in any one of claims 1 through 8.

11. The exhaust gas treatment apparatus (10) according to claim 9 or 10, wherein
    the exhaust gas treatment member (20) is a catalyst carrier or an exhaust gas filter.

12. A muffling apparatus (70) comprising:

an inner pipe (72);
an outer shell (76) covering the outside of the inner pipe (72); and
a sound absorber (74) disposed between the inner pipe (72) and the outer shell (76), wherein
the sound absorber (74) includes the mat member (30) as defined in any one of claims 1 through 8.

**Patentansprüche**

1. Verwendung eines Mattenteils (30) als ein Halte- und Dichtungsteil in einer Abgasbehandlungsvorrichtung (10), wobei das Mattenteil (30) umfasst:

   ein Basisteil (340), das anorganische Fasern (342) enthält und erste und zweite Hauptflächen (210, 260) hat; und
   ein Flächenkörperteil (310, 360), das an mindestens einer der ersten und zweiten Hauptflächen (210, 260) angeordnet ist, wobei
   das Flächenkörperteil (310, 360) Öffnungen (315) und einen Gerüstteil (312) enthält, der ein Teil ist, der sich von den Öffnungen des Flächenkörperteils (310, 360) unterscheidet,
   wobei der Gerüstteil (312) zumindest einen ersten Linienteil und einen zweiten Linienteil enthält, wobei
   der erste Linienteil mehrere gerade Linien enthält, die im Wesentlichen in einer ersten Richtung verlaufen und in einem im Wesentlichen regelmäßigen Intervall angeordnet sind; und
   der zweite Linienteil mehrere gerade Linien enthält, die im Wesentlichen in einer zweiten Richtung verlaufen und in einem im Wesentlichen regelmäßigen Intervall angeordnet sind, wobei
   das Flächenkörperteil (310, 360) irgendeines von Polyethylen, Polypropylen und Polyethylenterephtalat enthält.

2. Verwendung nach Anspruch 1, wobei
   die mehreren Öffnungen (315) im Wesentlichen regelmäßig angeordnet sind.

3. Verwendung nach Anspruch 1 oder 2, wobei
   die Formen der Öffnungen (315) im Wesentlichen gleich zueinander sind.

4. Verwendung nach einem der Ansprüche 1 bis 3, wobei
   eine maximale Länge der Öffnungen (315) des Flächenkörperteils (310, 360) gleich groß wie oder kleiner ist als ein 95% niedrigerer Grenzwert einer Faserlängenverteilung der anorganischen Fasern (342).

5. Verwendung nach einem der Ansprüche 1 bis 3, wobei
   eine maximale Länge der Öffnungen (315) des Flächenkörperteils (310, 360) gleich groß wie oder kleiner ist als 6 mm.

6. Verwendung nach einem der Ansprüche 1 bis 5, wobei
   die anorganischen Fasern (342) Aluminiumoxid und Siliciumdioxid enthalten.

7. Verwendung nach einem der Ansprüche 1 bis 6, wobei
   das Basisteil (340) ferner irgendeines von anorganischem Bindemittel und organischem Bindemittel oder beides enthält.

8. Verwendung nach einem der Ansprüche 1 bis 7, wobei
   eine Organische-Komponenten-Menge, die in dem Mattenteil (30) enthalten ist, gleich groß wie oder niedriger ist als 4,5 Gew.-%.

9. Abgasbehandlungsvorrichtung (10), umfassend:

   ein Abgasbehandlungsteil (20), das zwei Öffnungsflächen zum Durchführen von Abgas hat;
   ein Halte- und Dichtungsteil (24), das um zumindest einen Teil einer Umfangsfläche des Abgasbehandlungsteils (30) gewickelt ist, wobei die Umfangsfläche die Öffnungsflächen nicht einschließt; und
   ein zylindrisches Teil (12), das das Abgasbehandlungsteil (20) mit dem Halte- und Dichtungsteil (24) aufnimmt, das um das Abgasbehandlungsteil (20) gewickelt ist, wobei
   das Halte- und Dichtungsteil (24) das Mattenteil (30) nach einem der Ansprüche 1 bis 8 enthält.

10. Abgasbehandlungsvorrichtung (10), umfassend: ein Einlassrohr (2) und ein Auslassrohr (4) für Abgas; und
    ein Abgasbehandlungsteil (20), das zwischen dem Einlassrohr (2) und dem Auslassrohr (4) angeordnet ist, wobei

ein Wärmeisolierteil (26) an zumindest einem Teil des Einlassrohrs (2) angeordnet ist; und
das Wärmeisolierteil (26) das Mattenteil (30) nach einem der Ansprüche 1 bis 8 enthält.

11. Abgasbehandlungsvorrichtung (10) nach Anspruch 9 oder 10, wobei das Abgasbehandlungsteil (20) ein Katalysatorträger oder ein Abgasfilter ist.

12. Schalldämpfungsvorrichtung (70), umfassend:

ein inneres Rohr (72);
eine äußere Hülle (76), die das Äußere des inneren Rohrs (72) bedeckt; und
einen Schallabsorber (74), der zwischen dem inneren Rohr (72) und der äußeren Hülle (76) angeordnet ist, wobei der Schallabsorber (74) das Mattenteil (30) nach einem der Ansprüche 1 bis 8 enthält.

## Revendications

1. Utilisation d'un élément formant natte (30) en tant qu'élément de retenue et d'étanchéité dans un appareil de traitement de gaz d'échappement (10), dans laquelle l'élément formant natte (30) comprend :

un élément formant base (340) incluant des fibres inorganiques (342) et possédant des première et seconde surfaces principales (210, 260) ; et
un élément formant feuille (310, 360) disposé sur au moins l'une des première et seconde surfaces principales (210, 260), dans laquelle
l'élément formant feuille (310, 360) inclut des ouvertures (315) et une partie ossature (312), qui est une partie autre que les ouvertures de l'élément formant feuille (310, 360),
ladite partie ossature (312) inclut au moins une première partie de lignes et une seconde partie de lignes, dans laquelle
la première partie de lignes inclut plusieurs lignes droites s'étendant sensiblement dans une première direction et agencées à un intervalle sensiblement régulier ; et
la seconde partie de lignes inclut plusieurs lignes droites s'étendant sensiblement dans une seconde direction et agencées à un intervalle sensiblement régulier, dans laquelle
l'élément formant feuille (310, 360) inclut n'importe lequel de polyéthylène, de polypropylène et de polyéthylène téréphtalate.

2. Utilisation selon la revendication 1, dans laquelle
les plusieurs ouvertures (315) sont agencées sensiblement régulièrement.

3. Utilisation selon la revendication 1 ou 2, dans laquelle
les formes des ouvertures (315) sont sensiblement identiques les unes aux autres.

4. Utilisation selon l'une quelconque des revendications 1 à 3, dans laquelle
une longueur maximale des ouvertures (315) de l'élément formant feuille (310, 360) est inférieure ou égale à une valeur limite inférieure de 95 % d'une distribution de longueur de fibre des fibres inorganiques (342).

5. Utilisation selon l'une quelconque des revendications 1 à 3, dans laquelle
une longueur maximale des ouvertures (315) de l'élément formant feuille (310, 360) est inférieure ou égale à 6 mm.

6. Utilisation selon l'une quelconque des revendications 1 à 5, dans laquelle
les fibres inorganiques (342) incluent de l'alumine et de la silice.

7. Utilisation selon l'une quelconque des revendications 1 à 6, dans laquelle
l'élément formant base (340) inclut en outre l'un quelconque d'un liant inorganique et d'un liant organique ou les deux.

8. Utilisation selon l'une quelconque des revendications 1 à 7, dans laquelle
une quantité de composant organique incluse dans l'élément formant natte (30) est inférieure ou égale à 4,5 % en poids.

9. Appareil de traitement de gaz d'échappement (10) comprenant :

un élément de traitement de gaz d'échappement (20) ayant deux surfaces d'ouverture pour le passage de gaz d'échappement;

un élément de support et d'étanchéité (24) enroulé autour d'au moins une partie d'une surface circonférentielle de l'élément de traitement de gaz d'échappement (30), la surface circonférentielle excluant les surfaces d'ouverture ; et

un élément cylindrique (12) accueillant l'élément de traitement de gaz d'échappement (20) avec l'élément de support et d'étanchéité (24) enroulé autour de l'élément de traitement de gaz d'échappement (20), dans lequel l'élément de support et d'étanchéité (24) inclut l'élément formant natte (30) tel que défini dans l'une quelconque des revendications 1 à 8.

10. Appareil de traitement de gaz d'échappement (10), comprenant :

un tube d'admission (2) et un tube de sortie (4) pour des gaz d'échappement; et

un élément de traitement de gaz d'échappement (20) disposé entre le tube d'admission (2) et le tube de sortie (4), dans lequel

un élément d'isolation thermique (26) est disposé sur au moins une partie du tube d'admission (2) ; et

l'élément d'isolation thermique (26) inclut l'élément formant natte (30) tel que défini dans l'une quelconque des revendications 1 à 8.

11. Appareil de traitement de gaz d'échappement (10) selon la revendication 9 ou 10, dans lequel l'élément de traitement de gaz d'échappement (20) est un support catalytique ou un filtre de gaz d'échappement.

12. Silencieux (70) comprenant :

un tuyau interne (72) ;

une coque externe (76) recouvrant l'extérieur du tuyau interne (72) ; et

un amortisseur de bruit (74) disposé entre le tuyau interne (72) et la coque externe (76), dans lequel l'amortisseur de bruit (74) inclut l'élément formant natte (30) tel que défini dans l'une quelconque des revendications 1 à 8.

FIG.1

FIG.2

# FIG.3

310(360)

312
(312Y₁)

315(340)

312
(312X₁)

342

EP 2 042 694 B1

FIG.4

# FIG.5

## FIG.6

MAXIMUM LENGTH OF OPENING (mm)

EP 2 042 694 B1

FIG.7

# FIG.8

# FIG.9

# FIG.10

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H0861054 B
- JP 2003293756 A
- EP 0366484 A2
- US 6521834 B1
- US 4302495 A
- WO 2009009600 A1